## Europäisches Patentamt
## European Patent Office
## Office européen des brevets

(19)

(11) Publication number: **0 176 639**
**A2**

(12)

# EUROPEAN PATENT APPLICATION

(21) Application number: **84306798.4**

(22) Date of filing: **05.10.84**

(51) Int. Cl.⁴: **B 62 M 3/00**

(43) Date of publication of application:
**09.04.86** Bulletin **86/15**

(84) Designated Contracting States:
**AT BE CH DE FR GB IT LI LU NL SE**

(71) Applicant: **Wang, Chen-Tsan**
**No. 251 Chung-Shan Road**
**Taichung City(TW)**

(72) Inventor: **Wang, Chen-Tsan**
**No. 251 Chung-Shan Road**
**Taichung City(TW)**

(74) Representative: **Meeks, Frank Burton et al,**
**Urquhart-Dykes & Lord 47 Marylebone Lane**
**London W1M 6DL(GB)**

(54) Sprocket and crank assembly.

(57) A sprocket and crank assembly including an integral sprocket and crank part formed by a press operation from steel plate or super duralumin plate material, with the crank (21) projecting from the center of the sprocket (20) and extending at one side of the same, the sprocket (20) is formed with a toothed periphery, and a radial notch (224) constituting a discontinuity of the toothed periphery which is completed by a rack member (30).

PRIOR ART
FIG. 1

Croydon Printing Company Ltd.

EP 0 176 639 A2

0176639

Sprocket and Crank Assembly

This invention relates to a sprocket and crank assembly and particularly concerns an integral sprocket and crank for bicycles.

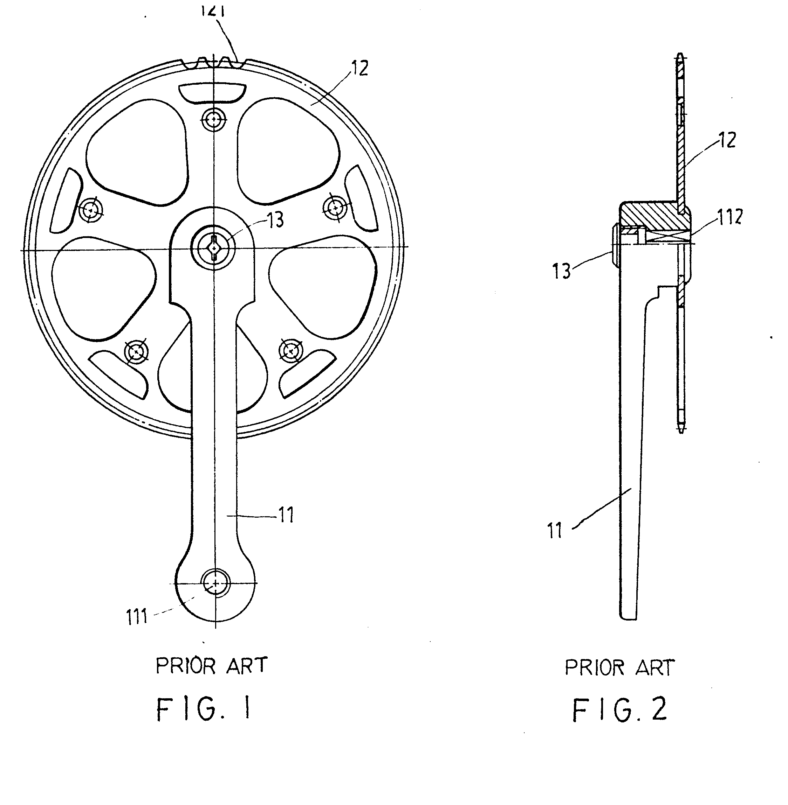

In mass production, the simplification of a process offers many benefits, especially, it reduces the costs of material, labour and equipment. The conventional sprocket and crank assembly, as shown in Fig. 1, including a crank arm 11 and a sproc et 12 formed separately, the crank 11 is formed ـrom steel or aluminium-based material and formed with a hole 111 at the rear end thereof for screwing with the bicycle pedal, the front end is provided with a through hole 112 threaded for connecting a crankshaft to rotate therewith, preferably, a dust cap 13 is mounted in front of the through hole 112. The sprocket 12 is cool formed from steel or aluminium-based material by a pressing operation, which is riveted on the front end of the crank 11, and provided with teeth 121 around the periphery for engaging with the chain.

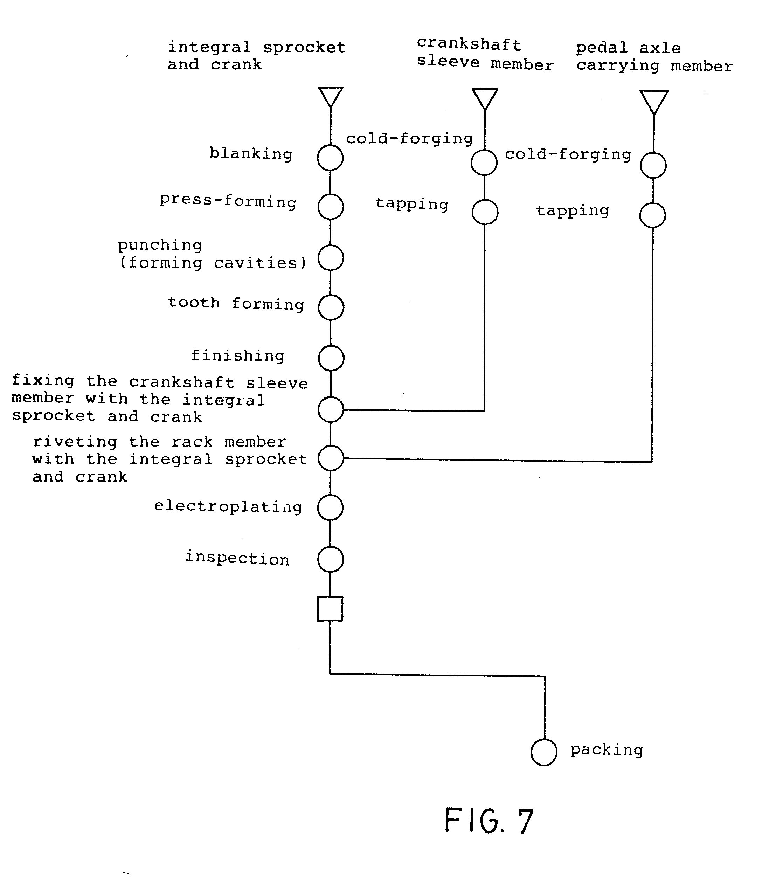

The manufacture of the known sprocket and crank member, sometimes may include several tens of steps, however, according to this invention, the sprocket and crank can be integrally formed as a unitary part by a press operation, as shown in Fig. 7, the manufacture of this integral sprocket and crank, in a preferred embodiment, including only 14 steps.

It is a general object of this invention to provide

1

a unitary sprocket and crank part which is formed integrally.

It is another object of this invention to provide a sprocket and crank which can be manufactured economically.

According to the present invention, a sprocket and crank assembly comprises: a sprocket having a toothed periphery and a radial notch extending to constitute a discontinuity of the toothed periphery; a crank including a front end, a middle portion and a rear end, being integrally formed with the sprocket and projected from the sprocket at the front end with an angle and aligned with the radial notch, the middle portion and the rear end extending substantially in parallel with the sprocket, the front end being provided with a crankshaft-receiving slot and the rear end provided with a hole for receiving the axle a bicycle pedal; a rack member fixed to the sprocket and extending over the radial notch to complete a continuity of the toothed periphery; and, a crankshaft sleeve member being engaged in the central slot for rotatably engaging the crankshaft therein.

According to the nature of the invention, the sprocket and the crank are integrally formed by a shearing press operation from steel plate or super duralumin plate.

Other features will become apparent from the following description with reference of the accompanying drawings.

2

In the accompanying drawings:

Fig. 1 is a front view of a bicycle sprocket and crank assembly according to the prior art;

Fig. 2 is a right side view of the sprocket and crank assembly shown in Fig. 1;

Fig. 3 is an exploded view of an integral sprocket and crank according to the preferred embodiment of this invention;

Fig. 4 is a front view of the integral sprocket and crank as shown in Fig. 3;

Fig. 5 is a right side view of the integral sprocket and crank as shown in Fig. 3;

Fig. 6 is a schematic view showing an example of the utilization of material when fabricating an integral sprocket and crank according to this invention; and

Fig. 7 is a flowchart showing an example of the manufacture of the integral sprocket and crank according to this invention.

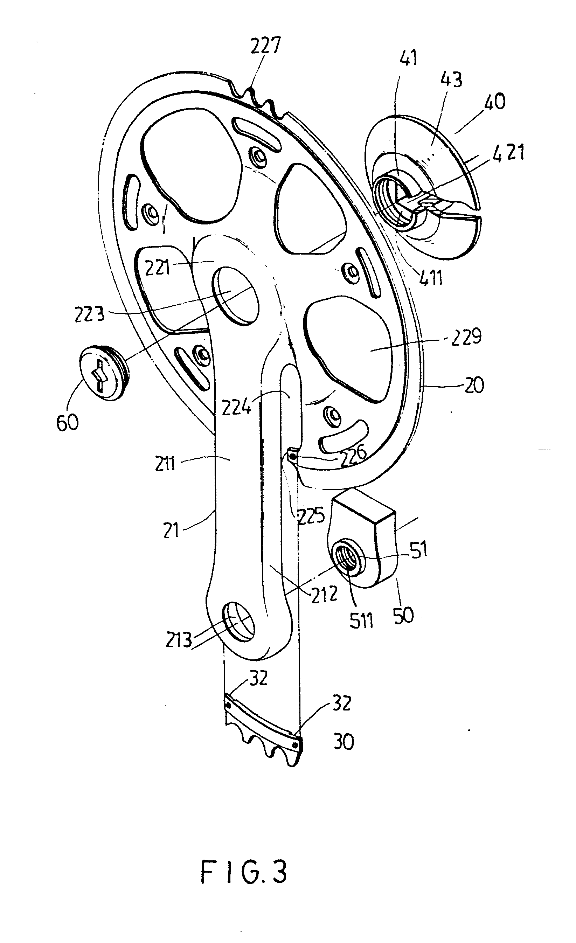

Referring now to the drawings, Fig. 3 shows the sprocket 20 with a crank 21, which are integrally formed by a pressing operation from a rolled high tensile steel plate or super duralumin plate, preferably, the crankshaft sleeve member 40, the pedal axle carrying member 50, a rack member 30 and the dust cap 60 are made of the same material.

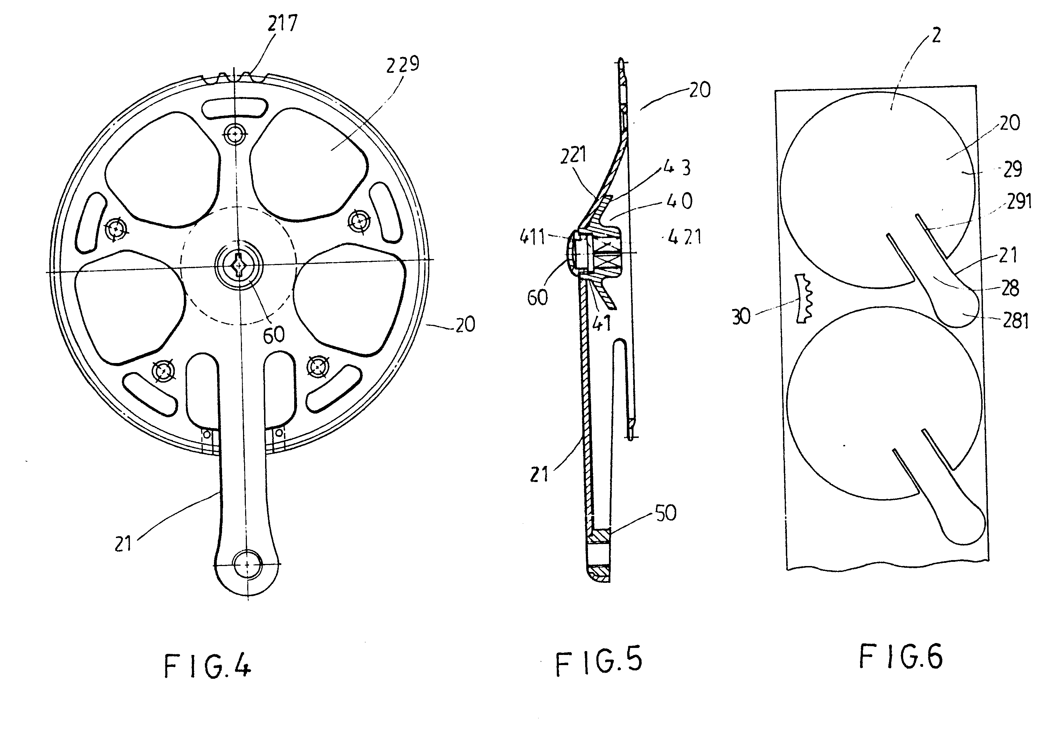

The shape of the integral sprocket and crank are formed in two steps, firstly, the desired shape of material 2 as shown in Fig. 6 should be cut in the form

3

of a flat plate from the steel plate or super duralumin plate, and then the flat shape plate is pressed into the spocket and crank, in which the crank 21 is pressed into a shape as an extension of the sprocket 20 projected from one side thereof, a notch 224 thus is formed. A pair of lugs 225 projected to the notch 224 are formed with a thickness of half that of the sprocket 20, and provided with bores 226 respectively.

As more clearly seen in Fig. 5, the front end portion 221 of the crank 21 constituted by a portion of the sprocket 20 that raised from the sprocket 20 at an angle and has a slope profile, a straight portion 211 adjacent to the front end portion 221 is extended parallelly with the sprocket 20, the periphery of the crank 21 is formed with flange 212 projecting at a right angle towards the sprcket 22 to provide strength, this configuration is also formed in the pressing operation.

Additionally, a crankshaft receiving slot 223 is formed at the center of the sprocket, and, a hole 213 for mounting the axle of bicycle pedal is formed at the rear end of the crank 21.

Referreing to Fig. 7, the flow-chart of the manufacture of the sprocket and crank assembly of this invention, attention particularly directed to the forming of the integral sprocket and crank part, in the step of blanking, a piece of plate material, preferably being cold-rolled steel plate or super duralumin plate, is blanked into several contoured plate 2 and rack 30, the contoured plate 2 has a shape including a circular portion 29, having two slits 291 formed symmetrically to a radius thereof, the material between the slits 291 is extended to project from the circular portion 29 to form a substantial rectangular extension 28, with an enlarged portion 281 provided in the rear end thereof, subsequently, in the step of pressing, a central hole 223 (crankshaft-receiving slot ) is formed in the center of the circular portion 29, the area 221 including the central hole 223 disposed above the slits 291 is raised to form a slope portion and leading a deviation of the rectangular extension 28 with respect to the circular portion 29, in the same step, the rectangular extension 28 is formed with peripheral flange 212 to enhance the strength of that part.

After the press forming operation of the unitary sprocket and crank part, the same part is subject to an operation to form cavities 229 in order to reduce the weight and enhance the strength of that part.

Subsequently, the sprocket 20 is subjected to the teeth-forming operation which is carried out in two steps, to provide the teeth 227 around the periphery of the sprocket 20 except for the notch 224.

To complete a continuous toothed periphery, a rack 30 having two ends 32 made with a thickness of half that of the sprocket 20 is prepared and riveted with the lugs 225 at that two ends 32.

After the formed tooth operation, the sprocket is

5

introduced to a finishing operation.

As shown in Fig. 6, in a preferred embodiment, the rack 30 is formed in the same press operation with the unitary sprocket 20 and crank 21 from the same plate material, therefore, the material can be utilized in the most economical way.

The crankshaft sleeve member 40 and the pedal axle carrying member 50 are formed by cool forging operations from alloy steel or duralumin plate.

It can be more clearly seen in Fig. 5, that the axle sleeve member 40 is formed with a cylindrical portion 41 and a skirt portion 43 projected therearound at a proper angle such that the slope of the skirt portion 43 conforms to the sloped portion 221 of the sprocket 20, therefore, it enables a portion of the skirt portion 43 to tightly engage with the sloped portion 221 of the crank 22 when assembling the two members in a relationship as shown in Fig. 5, the crankshaft sleeve member 40 is mounted in the crankshaft receiving slot 223 and secured therewith by welding, riveting or screwing, etc. The cylindrical portion 41 is provided with a bore 411 threaded at front section thereof, the rear section 421 of the bore 411 is made with a square cross-section for engaging the crankshaft (not shown).

A dust cap 60 is screwed with the front section 411, which can prevent dirts from passing into the bore 411 and provides a better appearance.

Since the crank 21 is integrally formed by a

6

shearing pressing process from plate material having uniform thickness, which is rather thin when compared with the conventional structure, an additional pedal axle carrying member 50 is mounted in the hole 213 at the rear end of the crank 21 for carrying the pedal axle to rotate therein.

The pedal axle carrying member 50 is provided with a threaded bore 511 extending through the thickness thereof, a projecting ring portion 51 is formed at one side, this ring portion 51 can be inserted into the hole 213 when the pedal axle carrying member 50 is assembled into the hollow 214, and being secured therein by welding, riveting or screwing, etc.

The finished product of the integral sprocket and crank formed from both material steel plate and super duralumin plate are subjected to the test according to Chinese National Standards and Japanese Industrial Standards, for both products, an axial stress of 200 $Kg/cm^2$ is applied on the loading point of the crank, no deformation and displacement of the crank and the sprocket are observed.

In a test of the strength in thrust direction of the integral sprocket and cranks made of steel plate and super duralumin, for both products, a stress of 150 $Kg/cm^2$ is applied on the loading point thereof in thrust direction, there is a relative displacement of 0.25 mm between the sprocket and crank in the former product, and 1.25 mm in the latter product.'

7

The integral sprocket and crank assembly according to this invention has a weight less than the conventional ones, and the material saved is a considerable amount.

Claims:

1. A sprocket and crank assembly comprising a sprocket (20) and a crank (21) secured at the center of said sprocket member (20), characterized in that: said sprocket (20) having a toothed periphery and a radial notch (224) extending to constitute a discontinuity of said toothed periphery, said crank (21) including a front end, a middle portion and a rear end, being integrally formed with said sprocket (20) and projected from said sprocket (20) at said front end with an angle and aligned with said radial notch (224), said middle portion and said rear end extending substantially in parallel with said sprocket (20), said front end being provided with a crankshaft-receiving slot (223) and said rear end provided with a hole (213) for receiving the axle a bicycle pedal; and a rack member (30) fixed to said sprocket (20) and extending over said radial notch (224) to complete a continuity of said toothed periphery.

2. A unitary sprocket and crank as claimed in claim 1, further comprising an crankshaft sleeve member (40) mounted in said crankshaft receiving slot (223) for securing the crankshaft therein.

3. A sprocket and crank assembly as claimed in claim 1, further comprising a pedal axle carrying member (50) mounted in said hole (213) for securing the axle of a bicycle pedal with said crank (21).

4. A sprocket and crank assembly as claimed in claim 1, wherein said crank (21) is formed with a U-shaped cross-

9

section.

5. A sprocket and crank assembly as claimed in claim 1, wherein said sprocket (20) and said crank (21) are integrally formed by a pressing operation.

6. A sprocket and crank assembly as claimed in claim 1, wherein said sprocket (20) and crank (21) are formed from a steel plate or a super duralumin plate.

7. A process for manufacturing an integral sprocket and crank, comprising the steps of:

a) preparing a piece of plate material;

b) blanking a contoured plate (2) from said piece of plate material, said contoured plate (2) having a shape including a circular portion (29) with two slits (291) formed symmetrically to a radius to interrupt the periphery of said circular portion (29), and, between said two slits (291) a substantial rectangular extending portion (28) being extended to project from said circular portion (29);

c) pressing said contoured plate (2) to form a central hole (223) of said circular portion (29), and a raised area (221) surrounding said central hole (223) to make said substantial rectangular extending portion (28) extended as a projection from said raised area (221) at an angle with respect to said circular portion (29) thus forming a radial notch (224) of said circular portion (29);

d) forming teeth around said interrupted periphery of said circular portion (29); and

e)   attaching a rack member (30) to said interrupted periphery  of  said circular portion (29) to  complete  a continuity of teeth around said   interrupted periphery of said circular portion (29).

PRIOR ART

FIG. 1

PRIOR ART

FIG. 2

1/4

0176639

2|4

FIG.3

FIG.4

FIG.5

FIG.6

3/4

0176639

4|4

integral sprocket and crank | crankshaft sleeve member | pedal axle carrying member

blanking — cold-forging — cold-forging

press-forming — tapping — tapping

punching (forming cavities)

tooth forming

finishing

fixing the crankshaft sleeve member with the integral sprocket and crank

riveting the rack member with the integral sprocket and crank

electroplating

inspection

packing

## FIG. 7